# EUROPÄISCHE PATENTSCHRIFT

(11) **EP 0 884 563 B1**
(45) Veröffentlichungstag und Bekanntmachung des Hinweises auf die Patenterteilung: **07.02.2007**
(21) Anmeldenummer: 98110400.3
(22) Anmeldetag: 06.06.1998
(51) Int. Cl.: G01D 5/244, G01D 5/347

(54) **Längenmesssystem mit modular aufgebautem Massstab**
Length measuring system having a modular scale
Système de mesure de longueurs avec une échelle modulaire

(30) Priorität: 12.06.1997 DE 19724732
(43) Veröffentlichungstag der Anmeldung: 16.12.1998
(73) Patentinhaber: Dr. Johannes Heidenhain GmbH, 83292 Traunreut (DE)
(72) Erfinder: Nelle, Günther, Dr.-Ing., 83346 Bergen (DE); Jung, Werner, 83301 Traunreut (DE)

(56) Entgegenhaltungen:
- DE-A- 1 548 875
- DE-A- 1 698 006
- DE-A- 2 505 587
- DE-A- 2 727 769
- DE-A- 2 730 715
- DE-A- 3 022 888
- FR-A- 2 385 081

## Beschreibung

Die Erfindung betrifft ein Längenmeßsystem mit modular aufgebautem Maßstab nach Anspruch 1.

Aus der DE 17 73 460 ist bekannt, daß ein besonders langer Maßstab sich modular aus mehreren kürzeren Maßstäben zusammensetzt. An den Stoßstellen der aneinander gereihten kürzeren Maßstäbe tritt jedoch das Problem auf, daß ein undefinierter Abstand vorliegt, der nicht quantifiziert werden kann und daher das Meßergebnis verfälscht. Um diese Verfälschung zu vermeiden, sind für den Maßstab zwei Abtastköpfe vorgesehen, die starr und mit definiertem Abstand miteinander verbunden werden. Weiterhin sind Schaltmittel vorgesehen, durch welche die Auswerteelektronik, die mit den Abtastköpfen verbunden ist, bei Annäherung an eine Stoßstelle von einem Abtastkopf auf den anderen Abtastkopf umgeschaltet wird. Die Umschaltung erfolgt derart, daß auf beiden Seiten der Stoßstelle zweier Maßstäbe eine Betätigungseinrichtung für die Schaltmittel angeordnet ist, durch die von dem Abtastkopf, der sich in Bewegungsrichtung kurz vor der Stoßstelle befindet auf den anderen Abtastkopf, der sich kurz hinter der Stoßstelle befindet, umgeschaltet wird.

Weiterhin wird der definierte Abstand der beiden Abtastköpfe bei dieser Umschaltung durch die Auswerteelektronik berücksichtigt.

Diese Realisierung weist den Nachteil auf, daß auf beiden Seiten der Stoßstellen Betätigungsmittel sowie Schaltmittel im Abtastkopf vorzusehen sind. Weiterhin sind zwei Abtastköpfe erforderlich, die einen definierten Abstand voneinander aufweisen müssen. Außerdem können aufgrund der mechanischen Umschaltung, die aufgrund der Streuung des Umschaltzeitpunktes der Schaltmittel und der Abnutzung der Betätigungsmittel relativ ungenau ist, bei besonders kleinen Teilungsperioden des Maßstabs Fehler auftreten.

Aus der DE 27 30 715 C3 ist ebenfalls eine Längenmeßeinrichtung bekannt, die aus mehreren Maßstäben besteht. Wie bereits bei der DE 17 73 460, wird auch hier bei Annäherung an die Stoßstelle zweier Maßstäbe von einem in Bewegungsrichtung vor der Stoßstelle liegenden Abtastkopf auf einen in Bewegungsrichtung hinter der Stoßstelle liegenden Abtastkopf umgeschaltet und der definierte Abstand zwischen den beiden Abtastköpfen in der Auswerteelektronik berücksichtigt. Dabei erfolgt die Umschaltung jedoch nicht mechanisch, sondern elektronisch, indem eine auf den Maßstäben aufgebrachte Synchronisationsspur von speziellen Abtastmitteln zur Detektion des Umschaltzeitpunktes ausgewertet wird.

Diese Realisierung weist prinzipiell die gleichen Nachteile wie die DE 17 73 460 auf, es sind Betätigungsmittel in Form einer zusätzlichen Synchronisationsspur auf den Maßstäben, zwei Abtastköpfe mit definiertem Abstand und Schaltmittel im Abtastkopf erforderlich.

Aus der DE 38 18 044 A1 ist ebenfalls eine Längenmeßeinrichtung bekannt, bei der mehrere Maßstäbe aneinander gereiht werden. Dabei werden Stoßstellen von Maßstäben durch spezielle Codefelder gekennzeichnet, deren Länge größer ist als die Länge der übrigen verwendeten Codefelder. Wird ein derartiges Codefeld aufgrund seiner großen Läge detektiert, wird dessen Auswertung unterdrückt. Weiterhin sind mindestens zwei Abtastköpfe vorgesehen, die - wie bereits bekannt - an Stoßstellen umgeschaltet werden, um auch an Stoßstellen eine Längeninformation zu erhalten.

Auch diese Anordnung weist den Nachteil auf, daß zusätzliche Codefelder besonders großer Länge erforderlich sind, um eine Detektion einer Stoßstelle zu ermöglichen, daß mindestens zwei Abtastköpfe erforderlich sind und daß eine Umschaltung der Auswerteelektronik zwischen den beiden Abtastköpfen erfolgen muß.

Aus der DE 15 48 875 ist eine Längenmeßeinrichtung bekannt, bei der mehrere Folienstücke, auf denen eine Teilung aufgebracht wurde, in eine Nut eines Halters eingeklebt werden und an den Längsseiten der Folienstücke diese mit dem Halter verschweißt werden. Dadurch soll an der Stoßstelle ein langfristig konstanter und definierter Spalt eingestellt werden, der ein ganzzahliges Vielfaches der Teilungsperiode beträgt.

Dies weist den Nachteil auf, daß durch die beim Schweißvorgang entstehende Wärmeentwicklung an den Schweißpunkten sich die Folie verformt. Durch die Einbettung der Folienstücke in die Nut wird der Schweißvorgang zusätzlich erschwert, da bei zum Halter senkrechter Zuführung der Schweißenergie entweder die Folie in ihrer gesamten Dicke geschmolzen werden muß oder der Halter auf der gesamten Höhe der Nut in einem bestimmten Bereich geschmolzen werden muß. Wird die Schweißenergie nicht senkrecht zum Halter zugeführt, so liegt ein relativ komplizierter und teurer Fertigungsprozeß vor. Ein weiterer Nachteil bei Verschweißen des Randes eines Teilungsträgers mit einer Kante einer Nut eines Halters besteht darin, daß vom Halter relativ viel Schweißenergie abgeleitet wird. Daher muß für eine zuverlässige Schweißverbindung relativ viel Schweißenergie zugeführt werden, was wiederum dazu führt, daß sich der Teilungsträger einschließlich der Teilung verformt und unbrauchbar wird.

Aus der DE 27 27 769 C2 ist eine gekapselte Längenmeßeinrichtung bekannt, bei der Teilungsträger, Halter und Hohlprofil, durch das die Längenmeßeinrichtung gekapselt wird, aus mehreren Teilstücken besteht, die in der Länge aneinander gereiht werden. Dabei wird ein Teilungsträger auf einem Halter fixiert und der Halter im Hohlprofil schwimmend befestigt. Um einen definierten Abstand von einem gradzahligen Vielfachen einer Teilungsperiode zwischen zwei benachbarten Teilungen herzustellen, sind in den Haltern entsprechende Einstellschrauben vorgesehen. Durch zusätzliche Federn werden die Teilstücke unter Spannung gehalten.

Diese Realisierung weist den Nachteil auf, daß Einstellschrauben erforderlich sind, um an der Stoßstelle zweier Teilungen den Spalt auf ein ganzzahliges Vielfaches einer Teilungsperiode einzustellen. Weiterhin ist von Nachteil, daß erst bei der Montage beim Anwender die einzelnen Teilstücke zu einer Längenmeßeinrichtung zusammengefügt werden und damit erst zu diesem Zeitpunkt die Einstellung der Spaltbreite erfolgt. Dadurch ist eine Justierung beim Hersteller nicht mehr möglich.

Die FR 2 385 081 A beschreibt eine Längenmesseinrichtung für große Messlängen, bei der der Halter aus mehreren Teilstücken besteht. Der Maßstab ist ein über alle Halter-Teilstücke gespanntes Maßband.

Aus der DE 25 05 587 B2 ist bekannt, bei einer Längenmeßeinrichtung die Meßteilung nur an einer einzigen Fläche am biegesteifen Hohlkörper, durch welchen die Längenmeßeinrichtung gekapselt wird, unter Zwischenschaltung einer dünnen hochelastischen Schicht, zu befestigen. Dadurch werden Zwangskräfte vermieden, wie sie beispielsweise bei einer Temperaturänderung durch Ausdehnung bei unterschiedlichen Ausdehnungskoeffizienten entstehen.

Aus der DE 33 02 643 ist eine Spanneinrichtung für ein Längenmeßsystem bekannt, bei der ein Träger für eine Maßverkörperung an einer Montagefläche eines Meßobjektes durch wenigstens eine Spannpratze befestigt wird, die in eine seitliche Nut im Träger angreift. Hierfür ist an der Spannpratze ein erster Vorsprung zum Eingriff in die Nut, ein zweiter Vorsprung zur Abstützung auf der Montagefläche und ein dritter Vorsprung als Abstützung für den Träger vorgesehen. Bei der Fixierung des Trägers durch die Spannpratze kann dadurch ein leichtes Verkippen der Spannpratze erfolgen.

Dabei ist von Nachteil, daß als Montagefläche des Trägers am Meßobjekt, die eine erhöhte Oberflächengüte aufweisen muß, die gesamte Fläche der Unterseite des Trägers benötigt wird, sowie zusätzlich die Auflagefläche der mindestens einen Spannpratze.

Aus der DE 1 698 006 A1 und der DE 30 22 888 A1 sind weitere Längenmeßeinrichtungen bekannt, bei denen mehrere Maßstäbe aneinander gereiht werden. Dabei werden Stoßstellen der Maßstäbe durch spezielle Verläufe ausgestaltet um die Abtastung möglichst störungsfrei zu ermöglichen.

Es stellt sich somit die Aufgabe, ein Längenmeßsystem mit modular aufgebautem Maßstab für große Messlängen anzugeben, welches einfach und kostengünstig herstellbar ist und mechanische Stabilität auch bei großen Längen erreicht.

Diese Aufgabe wird durch die im Anspruch 1 angegebenen Merkmale gelöst.

Es werden mehrere Halter verwendet und die Teilungsträger derart mit den Haltern verbunden, daß die Stoßstellen der Teilungsträger und die Stoßstellen der Halter möglichst weit voneinander entfernt sind. Dadurch wird eine besonders große mechanische Stabilität auch bei großen Längen erreicht.

Die schneidenförmige Ausgestaltung der Stoßstellen der Teilungsträger weist den Vorteil auf, daß die Teilungsträger besonders nah aneinander angefügt werden können und dadurch der Spalt an der Stoßstelle sehr klein wird. Weiterhin kann sich in dem durch die Phasen erzeugten freien Raum zwischen zwei Teilungsträgern Klebstoff ansammeln, der sich in diesem Bereich bei einem Zusammenschieben von zwei Teilungsträgern bei der Justierung des Spalts zwangsläufig anhäuft. Eine Verbreiterung des Spalts zwischen zwei Teilungsträgern durch Ansammeln von Klebstoff während der Justierung oder eine Verschmutzung der Teilung wird somit verhindert.

Damit die Teilung an einer Stoßstelle zweier Teilungsträger möglichst keine Unterbrechung aufweist, sind die schneidenförmigen Stoßstellen der Teilungsträger derart ausgebildet, daß die Oberfläche der Teilungsträger, auf der die Teilung aufgebracht ist, die größte Längserstreckung des Teilungsträgers aufweist.

Die Erfindung wird im folgenden anhand der in der Zeichnung dargestellten Ausführungsformen näher erläutert. Es zeigen:
- Fig. 1:: eine Ausführungsform einer Klebverbindung eines modular aufgebauten Maßstabs mit einem Halter,
- Fig. 2:: eine Ausführungsform einer Klebverbindung eines modular aufgebauten Maßstabs mit mehreren Haltern,
- Fig. 3a:: eine Ausführungsform mit einer starren Fixierung im Bereich der Stoßstelle,
- Fig. 3b:: die Ausführungsform aus Fig. 3a im Schnitt,
- Fig. 4a:: eine Ausführungsform einer Klemmverbindung der Teilungsträger,
- Fig. 4b:: die Ausführungsform aus Fig. 4a im Schnitt,
- Fig. 5a:: eine weitere Ausführungsform einer Klemmverbindung der Teilungsträger,
- Fig. 5b:: die Ausführungsform aus Fig. 5a im Schnitt,
- Fig. 6a:: eine vorteilhafte Anordnung einer Referenzmarke auf einem Teilungsträger,
- Fig. 6b:: eine Vergrößerung des Bereichs um den Spalt aus Fig. 6a,
- Fig. 7:: eine Ausführungsform einer elastischen, formschlüssigen Verbindung,
- Fig. 8:: eine weitere Ausführungsform einer elastischen, formschlüssigen Verbindung,
- Fig. 9:: eine Ausführungsform einer elastischen, magnetischen Verbindung und
- Fig. 10:: eine Ausführungsform eines Meßkopfes.

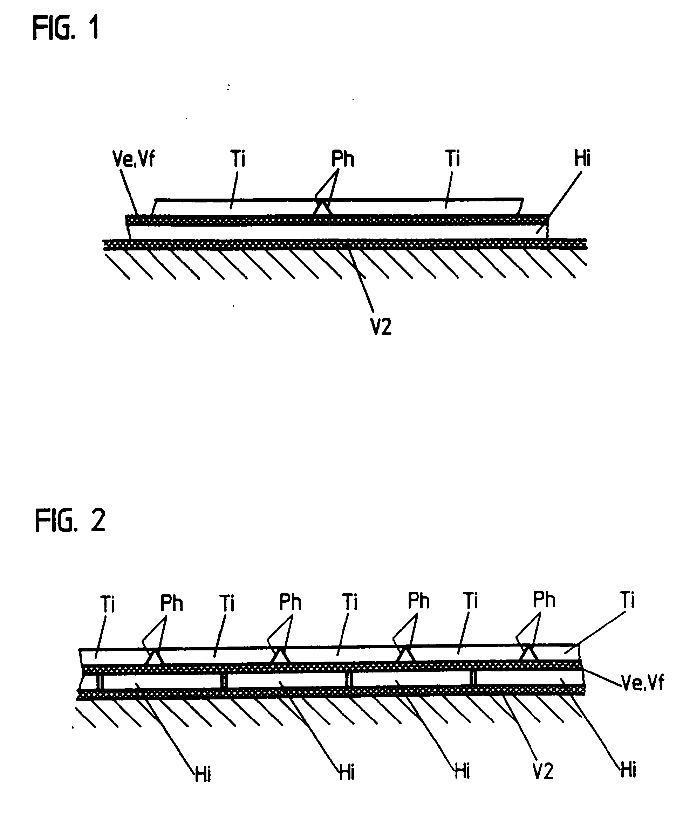

Fig. 1 zeigt einen modularen Maßstab, bestehend aus mehreren Teilungsträgern Ti, deren Oberseite eine Teilung (nicht eingezeichnet) trägt. Die Teilungsträger Ti sind an den Stoßstellen, wo sie mit einem angrenzenden Teilungsträger Ti zusammenstoßen, derart mit einer Phase PH versehen, daß die Oberseite der Teilungsträger Ti und damit die Teilung unverändert bleibt, an der Unterseite des Teilungsträgers Ti aber durch die Phase Ph ein dreieckiger Hohlraum erzeugt wird. Dadurch stoßen angrenzende Teilungsträger Ti nicht mit ihrer gesamten gegenüberliegenden Seitenfläche aufeinander, sondern nur mit einer dünnen Materialschicht an ihrer Oberfläche. Durch die Phase Ph sind die Stoßstellen der Teilungsträger Ti schneidenförmig ausgestaltet, so daß die aneinander stoßenden Seitenflächen sich linienartig an der Oberfläche der Teilungsträger Ti, welche die Teilung trägt, berühren. Ein Teilungsträger Ti weist durch die schneidenförmige Ausformung der Stoßstellen eine trapezförmige Kontur auf, wie in Fig 2 dargestellt. Dies ermöglicht auch eine einfachere Bearbeitung dieser Seitenflächen der Teilungsträger Ti an den Stoßstellen bei gleichzeitig minimaler Spaltbreite zwischen den Teilungen an der Oberfläche der Teilungsträger Ti.

Die Teilungsträger Ti werden durch eine Verbindung Ve und Vf mit dem Halter Hi verbunden. Diese Verbindung wird zunächst, insbesondere während des Herstellungsprozesses, als elastische Verbindung Ve ausgeführt, danach ist sie als feste Verbindung Vf mit großem Elastizitäts-Modul ausgestaltet. Diese feste Verbindung Vf bedingt, daß die Teilungsträger Ti und Halter Hi einen zumindest sehr ähnlichen Temperatur-Ausdehnunkskoeffizienten aufweisen. Eine derartige Verbindung Ve, Vf kann durch einen langsam aushärtenden Kleber, z.B. Epoxyd-Harz-Kleber, realisiert werden. Diese Klebverbindung ist zum Zeitpunkt des Zusammenfügens der zu verklebenden Teilungsträger Ti und Halter Hi noch elastisch, härtet aber nach einiger Zeit oder durch Bestrahlung mit UV-Licht aus und ist dann eine feste Verbindung Vf mit großem Elastizitäts-Modul. Die fest verbundenen Halter Hi und Teilungsträger Ti bilden schließlich den Maßstab bzw. die Maßverkörperung.

Der Halter Hi wird anschließend mit dem Meßobjekt, z.B. einem Maschinenbett einer Werkzeugmaschine, verbunden. Diese Verbindung V2 ist elastisch ausgestattet, um unterschiedliche temperaturabhängige Ausdehnungen von Maßstab und Meßobjekt ausgleichen zu können. Dadurch entstehen keine Zwangskräfte, die zu einer Zerstörung des Meßobjekts oder des Maßstabs führen können. Weisen Maßstab und Meßobjekt gleiche oder zumindest annähernd gleiche TemperaturAusdehnungskoeffizienten auf, kann diese Verbindung auch fest ausgeführt werden, so daß eine Verschiebung zwischen Maßstab und Meßobjekt nicht möglich ist.

Fig. 2 zeigt einen ähnlichen Maßstab wie Fig. 1. Auch in Fig. 2 weisen die Teilungsträger Ti an ihrer Oberseite eine Teilung auf und sind an ihren Stoßstellen derart schneidenförmig ausgeformt, daß sie nur mit einer dünnen Schicht der Oberfläche zusammenstoßen können. Durch eine Verbindung Ve, Vf werden die Teilungsträger Ti mit den Haltern Hi verbunden.

Im Unterschied zu Fig. 1 sind in Fig. 2 mehrere Halter Hi vorgesehen. Dabei ist von Bedeutung, daß die Stoßstellen, an denen die Halter Hi aneinander stoßen, möglichst weit entfernt sein sollen von den Stoßstellen, an denen die Teilungsträger Ti aneinander stoßen. Bei gleicher Länge von Teilungsträgern Ti und Haltern Hi bedeutet das, daß die Stoßstellen der Halter Hi im wesentlichen in der Mitte der Teilungsträger Ti und die Stoßstellen der Teilungsträger Ti in der Mitte der Halter Hi angeordnet sind, wie in Fig. 2 dargestellt. Dadurch weist auch ein Maßstab, bestehend aus Teilungsträgern Ti und Haltern Hi, der noch nicht über eine elastische Verbindung V2 mit dem Meßobjekt verbunden ist, eine erhöhte mechanische Stabilität auf.

Das Längenverhältnis von Haltern Hi und Teilungsträgern Ti sollte so gewählt werden, daß das längere Teil im wesentlichen ein ganzzahliges Vielfaches der Länge des kürzeren Teils aufweist. Dann ist sichergestellt, daß eine Stoßstelle eines längeren Teils im wesentlichen in der Mitte des kürzeren Teil auftritt und somit eine maximale Stabilität des Maßstabs erreicht wird.

Es besteht die Möglichkeit den Haltern Hi die identische Form wie den Teilungsträgern Ti zu geben, ohne allerdings eine Teilung aufzubringen. Dadurch, daß Teilungsträger Ti und Halter Hi identisch ausgeformt werden, ist die Herstellung im wesentlichen identisch, wodurch sich der Fertigungsprozeß und die Lagerhaltung wesentlich vereinfacht.

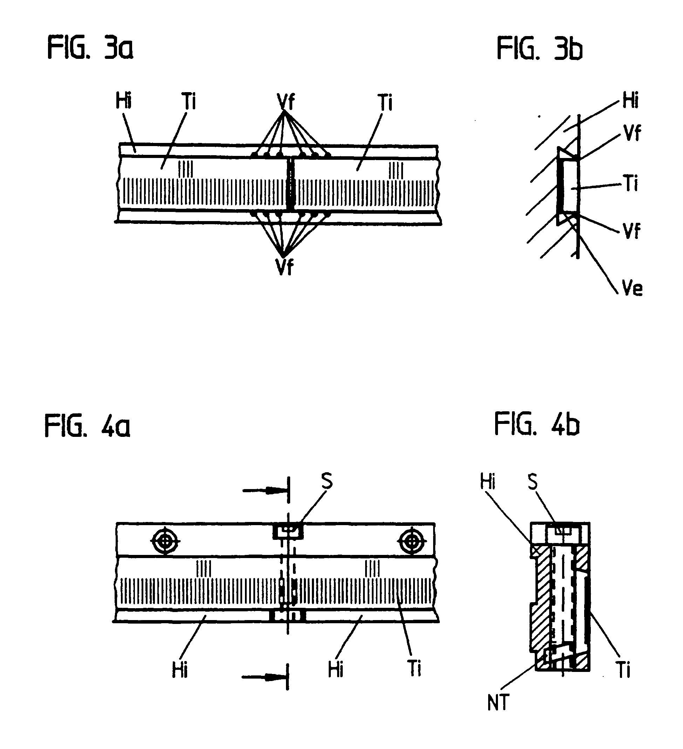

In Fig. 3a und Fig. 3b ist eine weitere mögliche Verbindung zwischen Teilungsträger Ti und Halter Hi im Detail dargestellt. Nachdem die Teilungsträger Ti durch eine dauerelastische Klebverbindung Ve mit dem Halter Hi verbunden wurden, werden die Teilungsträger Ti nach einer Justierung durch Schweißverbindungen Vf auf dem Halter Hi fixiert.

Um eine optimale Schweißverbindung zu realisieren, bei der sich der Teilungsträger Ti und damit die Teilung nicht aufgrund des Schweißvorgangs verformt, wird der Teilungsträger Ti in eine schwalbenschwanzförmige Nut des Halters Hi eingesetzt, wie in Fig. 3b gezeigt. Die Tiefe der Nut entspricht der Höhe der Teilungsträger Ti, so daß eine glatte Oberfläche von Halter Hi und Teilungsträger Ti entsteht. Die spezielle Form der Nut weist den Vorteil auf, daß beim Schweißvorgang zum einen nur wenig Material des Halters Hi geschmolzen werden muß und zum anderen, daß die Wärmeableitung über den Halter Hi nur gering ist. Ein weiterer Vorteil dieser Form der Nut besteht darin, daß die Teilungsträger Ti leicht in die Nut einzulegen sind, ohne daß die Flächen der Längsseiten besonders paßgenau ausgestaltet sein müssen.

Schweißverbindungen Vf sind im wesentlichen im Bereich der beiden Enden der Teilungsträger Ti vorgesehen, um die justierte Spaltbreite zwischen zwei Teilungsträgern Ti zu fixieren. Unmittelbar im Spalt zwischen zwei Teilungsträgern Ti sollten keine Schweißverbindungen Vf vorgesehen sein, insbesondere nicht im Bereich der Teilung.

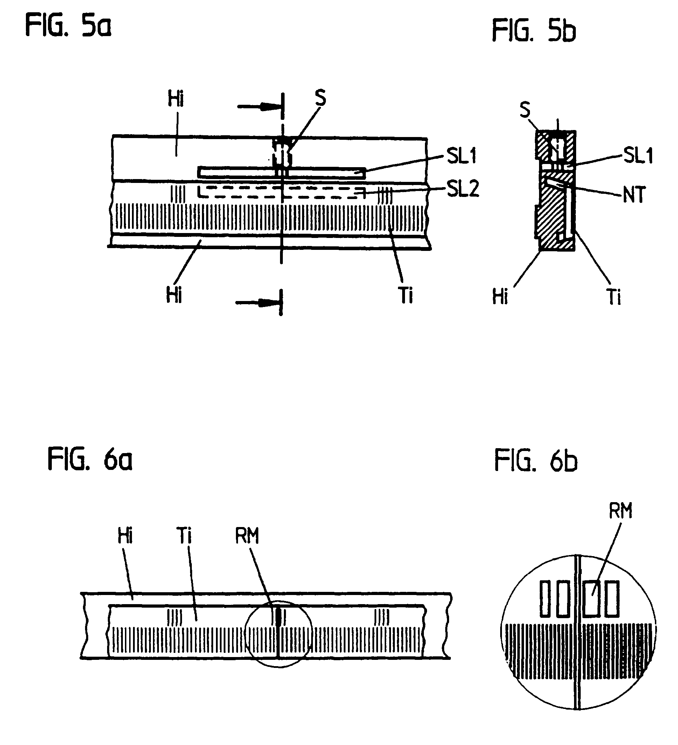

Eine weitere Alternative zur Realisierung der Verbindungen Ve und Vf zwischen Teilungsträgern Ti und Haltern Hi stellt die Möglichkeit dar, eine Klemmung, wie in den Fig. 4a, 4b und Fig. 5a, 5b gezeigt, vorzusehen.

Fig. 4a und 4b zeigen eine erste Realisierungsmöglichkeit einer Klemmverbindung. Der Halter Hi weist dabei an seiner Oberfläche eine schwalbenschwanzförmige Nut zur Aufnahme des Teilungsträgers Ti auf, der entsprechend der Form der Nut des Halters Hi trapezartig geformt ist. Weiterhin ist im Halter Hi eine zweite Nut Nt vorgesehen, die parallel zur Längserstrekkung des Halters Hi verläuft und durch die der Halter Hi nahezu in zwei Teile geteilt wird, lediglich eine dünne Materialbrücke bleibt erhalten.

Durch diese Ausgestaltung wird beim Anziehen eine Schraube S, deren Gewinde ausschließlich in dem äußeren Teil des durch die Nut NT nahezu abgetrennten Teils des Halters Hi greift, ein Biegemoment auf die Materialbrücke ausgeübt und die schwalbenschwanzförmige Nut, in der der Teilungsträger Ti eingefügt ist, verkleinert sich. Durch diese Verkleinerung wird die Klemmverbindung des Teilungsträgers Ti im Halter Hi erreicht. Aufgrund der Trapezform des Teilungsträgers Ti und der Form der zugehörigen Nut wird der Teilungsträger Ti beim Anziehen der Schraube S zusätzlich in die Nut eingepreßt.

Auch hier läßt sich eine elastische und eine feste Verbindung mit den gleichen Mitteln realisieren. Bleibt das Anzugsdrehmoment der Schraube S unter einem Schwellwert, liegt eine elastische Verbindung Ve vor, die eine geringfügige Verschiebung der Teilungsträger Ti bei deren Justierung ermöglicht. Wird das Anzugsdrehmoment der Schraube S erhöht, wird mit denselben Mitteln eine feste Verbindung Vf realisiert.

Die Unterseite des Halters Hi ist derart ausgestaltet, daß bei der Befestigung des Halters Hi an einem Meßobjekt oder in einem Gehäuse nicht die gesamte Unterseite auf dem Meßobjekt aufliegt, sondern bestimmte Auflageflächen parallel zur Längserstreckung des Halters Hi ausgebildet sind, wie Fig. 4b und Fig. 5b zeigen. Dadurch können die erhöhten Forderungen an die Oberflächengüte auf die Auflageflächen von Halter Hi und Meßobjekt begrenzt werden und es muß nicht die gesamte Unterseite der Halter Hi und die entsprechende Auflagefläche am Meßobjekt eine erhöhte Oberflächengüte aufweisen. Daraus ergibt sich, daß die Größe der Auflageflächen vorteilhaft so klein gewählt wird, daß eine zuverlässige Verbindung gerade noch möglich ist.

Werden zwei Auflageflächen vorgesehen, sind die Befestigungsmittel zur Befestigung des Halters Hi am Meßobjekt zwischen den beiden Auflageflächen angeordnet, damit durch die Befestigung beide Auflageflächen des Halters gegen die Maschine gepreßt werden. Wird diese Befestigung durch eine Verschraubung realisiert, sind die Schrauben mit definiertem Drehmoment anzuziehen, um einen optimalen Kontakt zwischen Halter und Meßobjekt zu ermöglichen. Weiterhin wird eine der Auflageflächen des Halters Hi unmittelbar unter der auf dem Teilungsträger Ti aufgebrachten Teilung angeordnet. Dadurch kann sichergestellt werden, daß die Teilung keinerlei Verwerfungen aufweist.

Eine weitere Realisierungsform einer Klemmverbindung ist in Fig. 5b dargestellt. Auch hier weist der Halter Hi zwei Nuten auf. Eine erste schwalbenschwanzförmige Nut, in die der trapezförmige Teilungsträger Ti eingeführt wird und eine zweite Nut Nt, durch die ein Teil des Halters Hi vom Rest des Halters bis auf eine dünne Materialbrücke abgetrennt wird. Weiterhin ist ein Schlitz SL1 im Halter Hi vorgesehen, in dessen Mitte eine Schraube S so angeordnet wird, daß diese Schraube S beim Einschrauben gegen einen Teil des Halters Hi drückt, wodurch die schwalbenschwanzförmige Nut, in der der Teilungsträger Ti angeordnet ist, verkleinert wird. Auch hier kann durch ein niedriges Anzugsdrehmoment der Schraube S eine elastische Verbindung Ve und durch ein großes Anzugsdrehmoment eine feste Verbindung Vf des Teilungsträgers Ti mit dem Halter Hi realisiert werden. Aufgrund der Trapezform des Teilungsträgers Ti und der Form der zugehörigen Nut wird der Teilungsträger Ti beim Anziehen der Schraube S auch hier zusätzlich in die Nut eingepreßt.

Alternativ zur Nut Nt kann auch ein zweiter Schlitz SL2, wie in Fig. 5a gezeigt, vorgesehen sein, der sich aber nicht über die gesamte Länge des Halters Hi erstecken darf.

Es hat sich als vorteilhaft erwiesen, im Bereich des Spalts zwischen zwei Teilungsträgern Ti, welche eine inkrementale Teilung tragen, eine Referenzmarke RM vorzusehen, wie dies Fig. 6a und Fig. 6b zeigen. Dadurch kann unmittelbar am Spalt durch das Meßsystem eine absolute Position festgestellt werden. Dadurch können sich Fehler, die eventuell durch den Spalt zwischen zwei Teilungsträgern Ti verursacht werden, nur in einem sehr kleinen Bereich um den Spalt auswirken.

Bei der Herstellung eines oben beschriebenen modularen Maßstabs werden zunächst die Teilungsträger Ti mit einem oder mehreren Haltern Hi durch eine erste elastische Verbindung Ve verbunden. Anschließend werden die Teilungsträger Ti derart justiert, daß die Spaltbreite an der Stoßstelle zwischen zwei Teilungsträgern Ti möglichst genau ein ganzzahliges Vielfaches der Teilungsperiode der auf den Teilungsträgern Ti aufgebrachten Teilung beträgt. Dies ist von besonderer Bedeutung, da sonst bei der Überlagerung der Teilung der Abtastplatte des Meßkopfes mit den Teilungen zweier Teilungsträger Ti an einer Stoßstelle bei der Teilung eines Teilungsträgers ein Versatz auftreten würde. Dieser Versatz würde dann zu einem Meßfehler führen.

Versuche haben ergeben, daß Abweichungen der Spaltbreite zwischen zwei Teilungsträgern Ti in der Größenordnung von ±5% der Teilungsperiode noch toleriert werden können. Bei einer Teilungsperiode von beispielsweise 20 µm entspricht dies einer Genauigkeit von 2 µm mit der die Spaltbreite zwischen zwei Teilungsträgern Ti justiert werden muß.

Sobald die Spaltbreite zwischen den Teilungsträgern Ti eingestellt wurde, wird diese Spaltbreite durch eine unelastische zweite Verbindung Vf mit großem Elastizitäts-Modul fixiert. Diese zweite Verbindung Vf kann beispielsweise durch einen fest aushärtenden Epoxyd-Harz-Kleber realisiert werden, der über die gesamte Länge der Teilungsträger Ti eine feste Verbindung Vf bewirkt. Dies weist den Vorteil auf, daß die erste elastische Verbindung Ve ebenfalls durch diesen Epoxyd-Harz-Kleber realisiert werden kann, da dieser eine gewisse Zeit zum Aushärten benötigt. Es sind somit nicht tatsächlich zwei verschiedenen Verbindungen Ve und Vf zu realisieren, sondern die elastische Verbindung Ve geht in die feste Verbindung Vf durch Aushärten des Klebstoffs über. Auch bei einer Klemmverbindung kann die Verbindungsart - ob elastisch oder fest - sehr einfach über das Anzugsdrehmoment der Schraube S eingestellt werden.

Alternativ kann die erste elastische Verbindung Ve auch durch einen dauerelastischen Kleber realisiert werden und anschließend eine zweite feste Verbindung Vf mit großem Elastizitäts-Modul insbesondere im Bereich der Stoßstellen der Teilungsträger Ti durch eine Schweißverbindung von Teilungsträger Ti und Halter Hi realisiert werden.

Wurde die Spaltbreite zwischen den Teilungsträgern Ti derart fixiert, kann der Maßstab am Meßobjekt befestigt werden. Dies erfolgt vorteilhaft durch eine dauerelastische dritte Verbindung, damit temperaturbedingte unterschiedliche Ausdehnungen von Meßobjekt und Maßstab nicht zu Zwangskräften führen.

Diese elastische dritte Verbindung V2 kann durch ein zweiseitiges Klebeband zwischen Meßobjekt und Halter Hi realisiert werden.

Alternativ dazu besteht die Möglichkeit, durch einen Formschluß eine elastische Verbindung V2 zu realisieren, wie in den Fig. 5 und 6 dargestellt. Dabei wird der Halter Hi derart ausgeformt, daß er mit dem Meßobjekt einen Formschluß eingeht. Dabei ist selbstverständlich eine Seite des Maßstabs zu fixieren.

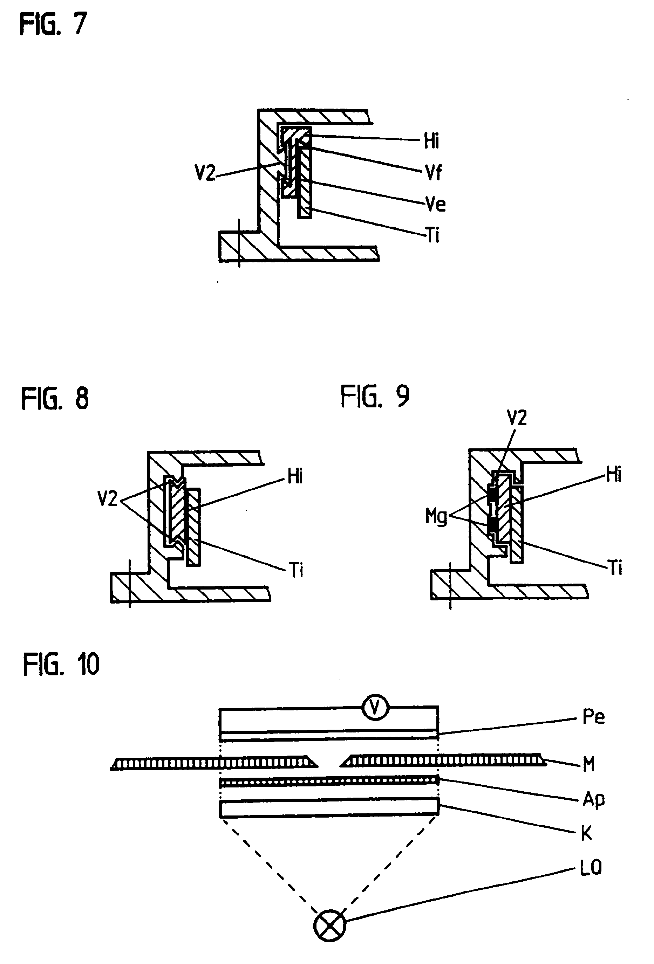

Eine magnetische Fixierung, wie in Fig. 7 dargestellt, stellt eine weitere Alternative dar, eine elastische Verbindung V2 zwischen dem Maßstab und dem Meßobjekt zu realisieren. Dabei sind entweder im Halter Hi oder im Meßobjekt oder dazwischen Magnete Mg vorgesehen und Meßobjekt und/oder Halter oder beide sind aus magnetisch beeinflußbarem Material, so daß aufgrund des Magnetfeldes der Magnete Mg eine elastische Verbindung V2 zwischen Meßobjekt und Maßstab hergestellt wird.

In Fig. 10 ist ein geeigneter Meßkopf für das erfindungsgemäße Längenmeßsystem für eine photoelektrische Abtastung nach dem Schattenwurf-Prinzip schematisch dargestellt. Bei einer Abtastung nach dem Reflexionsprinzip ist lediglich die hinter dem Maßstab M liegende Baugruppe der Photoelemente Pe vor dem Maßstab M anzuordnen. Der Meßkopf gemäß Fig. 10 weist ein Lichtquelle LQ, einen Kondensor K und eine Abtastplatte AP, auf der mindestens eine Gitterstruktur mit gleicher Teilung wie auf dem Maßstab M aufgebracht wurde, und eine Baugruppe mit Photoelementen Pe auf. Zwischen der Abtastplatte Ap und den Photoelementen Pe ist der Maßstab M, wie oben beschrieben, angeordnet.

Bewegt sich der Meßkopf über den Maßstab M, wird durch die Überlagerung der Teilungen der Abtastplatte und des Maßstabs ein Hell/Dunkel Muster auf den Photoelementen Pe abgebildet und diese geben eine entsprechende Spannung V aus, deren Frequenz sich abhängig von der Bewegungsgeschwindigkeit und der Teilungsperiode ändert. Tritt nun ein Spalt an einer Stoßstelle zweier Teilungsträger des Maßstabs M in den durch Abtastplatte Ap und Photoelemente Pe abgetasteten Bereich des Maßstabs M, wird im Bereich der Spaltbreite nur die Teilung der Abtastplatte Ap auf den Photoelementen Pe abgebildet, auf dem Maßstab ist in diesem Bereich keine Teilung vorhanden. Dadurch erhöht sich der Lichteinfall auf den Photoelementen Pe und der Gleichanteil der von den Photoelementen Pe ausgegebenen Spannung V steigt, bis sich der Spalt außerhalb des Abtastbereichs befindet. Der bei einer Bewegung auftretende hochfrequente Anteil der Spannung V ändert sich jedoch nicht, da in wesentlichen Bereichen des Abtastbereichs, auf dem Maßstab M eine Teilung vorhanden ist und der Bereich, der abgetastet wird, im Vergleich zur Spaltbreite groß ist.
Dabei ist es ohne Bedeutung, ob an dem Maßstab M eine Transmission oder Reflexion erfolgt. Weiterhin ist ohne Bedeutung, ob an der Stoßstelle zweier Teilungsträger, an der keine Teilung auf dem Maßstab M vorhanden ist, das Licht vollständig transmittieren kann bzw. reflektiert wird oder ob eine Transmission bzw. Reflexion vollständig verhindert wird. In beiden Fällen ändert sich lediglich der Gleichanteil der Spannung V.

## Patentansprüche

1. Längenmeßsystem mit modular aufgebautem Maßstab, bei dem mehrere Teilungsträger (Ti) in Längsrichtung aneinandergereiht, mit mehreren in Längsrichtung aneinandergereihten Haltern (Hi) verbunden und durch einen Meßkopf abgetastet werden, wobei die Teilungsträger (Ti) und Halter (Hi) einen annähernd gleichen Temperatur-Ausdehnungkoeffizienten aufweisen, **dadurch gekennzeichnet, daß** die Stoßstellen aneinandergrenzender Halter (Hi) möglichst weit versetzt von Stoßstellen aneinandergrenzender Teilungsträger (Ti) angeordnet sind.

2. Längenmeßsystem nach Anspruch 1, **dadurch gekennzeichnet, daß** Halter (Hi) an den Stoßstellen zu angrenzenden Haltern (Hi) schneidenförmig ausgestaltet sind.

3. Längenmeßsystem nach einem der Ansprüche 1 bis 2, **dadurch gekennzeichnet, daß** Teilungsträger (Ti) und Halter (Hi) identische Außenabmessungen aufweisen.

4. Längenmeßsystem nach einem der Ansprüche 1 bis 3, **dadurch gekennzeichnet, daß** die Stoßstellen der Teilungsträger (Ti) annähernd in der Mitte der Längserstreckung der Halter (Hi) angeordnet sind.

5. Längenmeßsystem nach einem der Ansprüche 1 bis 4, **dadurch gekennzeichnet, daß** an den Stoßstellen der Teilungsträger (Ti) eine Referenzmarke (RM) für die Längenmessung vorgesehen ist.

6. Längenmeßsystem nach einem der Ansprüche 1 bis 5, **dadurch gekennzeichnet, daß** eine elastische Verbindung (Ve) zwischen Teilungsträgern (Ti) und Halter (Hi) durch eine Klebung vorgesehen ist.

7. Längenmeßsystem nach einem der Ansprüche 1 bis 6, **dadurch gekennzeichnet, daß** Teilungsträger (Ti) an ihren Stoßstellen zusätzlich durch einen feste Verbindung (Vf) fixiert werden und daß der Spalt an der Stoßstelle zweier Teilungsträger (Ti) im wesentlichen ein ganzzahliges Vielfaches der Teilungsperiode beträgt.

8. Längenmeßsystem nach Anspruch 7, **dadurch gekennzeichnet, daß** die feste Verbindung (Vf) der Teilungsträger (Ti) an dem Halter (Hi) bevorzugt im Bereich der Stoßstellen der Teilungsträger (Ti) durch eine Schweißverbindung oder eine Klemmverbindung oder durch langsam aushärtenden Klebstoff erfolgt.

9. Längenmeßsystem nach einem der Ansprüche 1 bis 8, **dadurch gekennzeichnet, daß** eine Baugruppe zur Abtastung der Teilungen am Meßkopf mindestens eine Erstreckung von mehreren Teilungsperioden in Längsrichtung der Teilungsträger (Ti) aufweist, wodurch bei einer Abtastung das reflektierte oder transmittierte Signal mehrerer Teilungsperioden gemittelt wird.

## Claims

1. A length measuring system with a measuring scale of modular construction, in which a plurality of scale carriers (Ti) are arranged one after the other in the longitudinal direction, are connected to a plurality of holders (Hi) arranged one after the other in the longitudinal direction and are sensed by measuring head, wherein the scale carriers (Ti) and holders (Hi) have approximately equal coefficients of thermal expansion, **characterized in that** the joints of adjoining holders (Hi) are offset as far as possible from the joints of adjoining scale carriers (Ti).

2. A length measuring system according to claim 1, **characterized in that** holders (Hi) are designed like blades at the joints with adjoining holders (Hi).

3. A length measuring system according to either of claims 1 and 2, **characterized in that** scale carriers (Ti) and holders (Hi) have identical outer dimensions.

4. A length measuring system according to any of claims 1 to 3, **characterized in that** the joints of the scale carriers (Ti) are disposed approximately in the middle of the longitudinal extent of the holders (Hi).

5. A length measuring system according to any of claims 1 to 4, **characterized in that** a reference mark (RM) for the length measurement is provided at the joints of the scale carriers (Ti).

6. A length measuring system according to any of claims 1 to 5, **characterized in that** an elastic bond (Ve) is provided by an adhesive between scale carriers (Ti) and holders (Hi).

7. A length measuring system according to any of claims 1 to 6, **characterized in that** the scale carriers (Ti) are additionally fixed at their joints by a fixed connection (Vf) and **in that** the gap at the joint of two scale carriers (Ti) amounts substantially to an integral multiple of the scale period.

8. A length measuring system according to claim 7, **characterized in that** the fixed connection (Vf) of the scale carriers (Ti) to the holders (Hi) is preferably effected in the region of the joints of the scale carriers (Ti) by a welded connection or a clamped connection or by a slow hardening adhesive.

9. A length measuring system according to any of claims 1 to 8, **characterized in that** an assembly on the measuring head for sensing the scales has an extent of at least a plurality of scale periods in the longitudinal direction of the scale carriers (Ti), whereby the reflected or transmitted signal of a plurality of scale periods is averaged when sensing.

## Revendications

1. Système de mesure de longueurs comprenant une échelle graduée à structure modulaire, dans lequel plusieurs supports de graduation (Ti) sont disposés les uns à la suite des autres dans la direction longitudinale, sont reliés à plusieurs éléments de fixation (Hi) disposés les uns à la suite des autres dans la direction longitudinale et sont balayés par une tête de mesure, les supports de graduation (Ti) et les éléments de fixation (Hi) présentant un coefficient de dilatation thermique sensiblement identique, **caractérisé par le fait que** les points de jonction d'éléments de fixation (Hi) contigus sont décalés le plus possible par rapport aux points de jonction de supports de graduation (Ti) contigus.

2. Système de mesure de longueurs selon la revendication 1, **caractérisé par le fait que** des éléments de fixation (Hi), au niveau des points de jonction avec des éléments de fixation (Hi) contigus, sont réalisés avec des arêtes vives.

3. Système de mesure de longueurs selon une des revendications 1 à 2, **caractérisé par le fait que** les supports de graduation (Ti) et les éléments de fixation (Hi) présentent des dimensions extérieures identiques.

4. Système de mesure de longueurs selon une des revendications 1 à 3, **caractérisé par le fait que** les points de jonction des supports de graduation (Ti) sont disposés sensiblement au milieu de la longueur des éléments de fixation (Hi).

5. Système de mesure de longueurs selon une des revendications 1 à 4, **caractérisé par le fait qu'**une marque de référence (RM) pour une mesure de longueur est prévue aux points de jonction des supports de graduation (Ti).

6. Système de mesure de longueurs selon une des revendications 1 à 5, **caractérisé par le fait qu'**une liaison élastique (Ve) par collage est prévue entre les supports de graduation (Ti) et les éléments de fixation (Hi).

7. Système de mesure de longueurs selon une des revendications 1 à 6, **caractérisé par le fait que** des supports de graduation (Ti) sont fixés en plus, au niveau de leurs points de jonction, par une liaison fixe (Vf) et que l'interstice au niveau du point de jonction de deux supports de graduation (Ti) correspond sensiblement à un multiple entier de la période de division.

8. Système de mesure de longueurs selon la revendication 7, **caractérisé par le fait que** la liaison fixe (Vf) des supports de graduation (Ti) sur l'élément de fixation (Hi) est de préférence réalisée dans la région des points de jonction des supports de graduation (Ti), par soudage ou collage ou par un adhésif à durcissement lent.

9. Système de mesure de longueurs selon une des revendications 1 à 8, **caractérisé par le fait qu'**un module de balayage des graduations, prévu sur la tête de mesure, présente au moins une longueur de plusieurs périodes de division dans la direction longitudinale des supports de graduation (Ti), ce qui a pour effet que lors d'un balayage, on détermine le signal réfléchi ou transmis de plusieurs périodes de division.
